# EUROPÄISCHE PATENTSCHRIFT

(11) **EP 2 583 600 B1**
(45) Veröffentlichungstag und Bekanntmachung des Hinweises auf die Patenterteilung: **10.05.2017**
(21) Anmeldenummer: 12189360.6
(22) Anmeldetag: 19.10.2012
(51) Int. Cl.: A47J 39/00, F24C 7/08

(54) **Gargerät mit mehreren Garräumen und Verfahren zur Steuerung eines solchen Gerätes**
Cooking device with multiple cooking chambers and method for controlling such a device
Appareil de cuisson doté de plusieurs espaces de cuisson et procédé de commande d'un tel appareil

(30) Priorität: 19.10.2011 DE 102011116272
(43) Veröffentlichungstag der Anmeldung: 24.04.2013
(73) Patentinhaber: MKN Maschinenfabrik Kurt Neubauer GmbH & Co. KG, 38300 Wolfenbüttel (DE)
(72) Erfinder: Socher, Michael, 47249 Duisburg (DE); Ruhe, Dirk, 38667 Bad Harzburg (DE)
(74) Vertreter: Strobel, Wolfgang

(56) Entgegenhaltungen:
- EP-A2- 1 694 098
- EP-A2- 1 849 365
- WO-A2-2009/097340
- DE-U1-202008 017 544
- US-A1- 2010 301 034
- US-B1- 6 255 630

## Beschreibung

Die vorliegende Erfindung betrifft ein Gargerät, welches zur Behandlung von Nahrungsmittel dient, das mehrere Garräume, mehrere dem jeweiligen Garraum zugeordnete Heizelemente, eine Gerätesteuerung, die geeignet ist, mehrere Garräume zu steuern, und gemeinsame Anzeige- und Bedienelemente aufweist. Die vorliegende Erfindung betrifft ferner ein Verfahren zur Steuerung eines solchen Gargerätes.

Gargeräte wie zum Beispiel Kombidämpfer oder Kippbratpfannen können mehrere Garräume in einem Gargerät vereinen. So ist es möglich die Funktionalität oder Kapazität mehrerer Gargeräte zusammenzufassen und einige Baugruppen einfach anstatt mehrfach auszuführen. Es können beispielsweise Geräteanschlüsse zusammengefasst werden.

Ein Beispiel für ein Gargerät mit mehreren Garräumen und einer entsprechenden Gerätesteuerung ist aus der EP 1 719 952 A2 bekannt. Das Gargerät weist ein säulenförmiges Basisgerät auf, an dem zwei Garräume drehbar angelenkt sind, wobei an der Frontseite eine Mehrzahl von gemeinsamen Anzeige- und Bedienelementen vorgesehen sind. An der Oberseite der Säule befindet sich eine Heizplatte.

Neben den Geräteanschlüssen ist auch eine gemeinsame Nutzung einer Gerätesteuerung sowie die Nutzung gemeinsamer Anzeige- und Bedienelemente von Vorteil. Diese müssen in dem Gargerät dann nicht mehrfach vorgesehen werden, was sowohl Kosten als auch entsprechenden Platz einspart.

Die Garräume können auch gleichzeitig zum Garen unterschiedlicher Produkte genutzt werden. Dabei ist jeweils vorgesehen, dass ein Garraum aktiv gesteuert wird, also dass vom Benutzer konzentriert mit der entsprechenden Steuerung gearbeitet wird, Änderungen vorgesehen werden, Verfahrensschritte durchgeführt werden etc.

Nachdem die entsprechenden Vorbereitungsmaßnahmen getätigt werden und beispielsweise die Zubereitung einer in dem ersten Garraum platzierten Speise begonnen und gestartet wird, wird dieser Garraum nur noch passiv weitergesteuert, nämlich auf der Grundlage der schon eingegebenen Befehle.

Die Steuerung schaltet jetzt auf den oder einen anderen Garraum und ermöglicht es, dem Nutzer nun hier Befehle für die Zubereitung einer in diesem Garraum zuzubereitenden Speise zu geben.

Sind hier alle Vorbereitungen abgeschossen und Befehle gegeben, kann nun hier die im zweiten Garraum vorgesehene Speise zubereitet werden und der Nutzer wendet sich einem dritten Garraum oder auch einer ganz anderen Tätigkeit zu. Je nach Bedarf oder bei Abschluss eines Zubereitungsvorgangs kann dann der Nutzer wieder an den ersten oder den zweiten Garraum herantreten und dort weitere Maßnahmen treffen oder auch die Speisen entnehmen.

Die bekannten Gargeräte arbeiten hier mit einfachen Umschaltungen. Dem Benutzer wird auf einer Anzeige verdeutlicht, welchen der zwei oder mehr Garräume er gerade aktiv steuert. Die Anzeige- und Bedienelemente erhalten hierzu eine für den Benutzer eindeutige Zuordnung.

Möchte der Benutzer gerade nicht den Garraum steuern, der ihm angezeigt wird, schaltet er einfach auf den anderen oder einen der anderen Garräume um.

Aus der DE 20 2008 017 544 U1 ist ein gewerbliches Gargerät, insbesondere Heißluftdämpfer bekannt, mit einem Gehäuse, in dem eine Anzahl von n Garräumen mit jeweils wenigstens einer Garraumtür angeordnet ist, wobei n eine positive Ganzzahl größer oder gleich 2 ist. Dieses Gargerät weist ein erstes und ein zweites Informations-Eingabe/Ausgabe-Bedienelement auf, wobei jedes zweite Informations-Eingabe/Ausgabe-Bedienelement ausgestaltet ist, aus einem ihm zugeordneten Garraum und/oder wenigstens einem Parameter des in dem ihm zugeordneten Garraum ablaufenden Garprozesses anzuzeigen.

In der DE 20 2008 017 544 U1 ist auch ein Verfahren beschrieben, das die folgenden Schritte aufweist: Erfassen des Zustands einer Anzahl von n-1 zweiten Informations-Eingabe/Ausgabe-Bedienelementen, von denen jeweils eines einem Garraum zugeordnet ist, so dass n-1 Garräume einem zweiten Informations-Eingabe/Ausgabe-Bedienelement zugeordnet sind, wobei der eine verbleibende Garraum dem ersten Informations-Eingabe/Ausgabe-Bedienelement zugeordnet ist, um eine Zuordnung des ersten Informations-Eingabe/Ausgabe-Bedienelements zu einem der n-1 Garräume, den den n-1 zweiten Informations-Eingabe/Ausgabe-Bedienelement zugeordnet sind und die Zuordnung des dem ersten Informations-Eingabe/Ausgabe-Bedienelement bisher zugeordneten Garraums zu dem zweiten Informations-Eingabe/Ausgabe-Bedienelement, das dem Garraum zugeordnet war, dem ersten Informations-Eingabe/Ausgabe-Bedienelement neu zugeordnet wird, zu bewirken.

Gemäß DE 20 2008 017 544 U1 wird bei Auswahl eines anderen Garraums durch Betätigung des zweiten Informations-Eingabe/Ausgabe-Bedienelements die Garraum-Zuordnung zwischen dem betätigten zweiten Informations-Eingabe/Ausgabe-Bedienelement und dem ersten Informations-Eingabe/Ausgabe-Bedienelement getauscht.

Aus der US 6,255,630 B1 ist ein Gargerät bekannt beschrieben, das zwei Garräume in Form eines oberen und eines unteren Ofens mit entsprechenden Heizelementen aufweist. Das Gargerät wird von einer gemeinsamen Gerätesteuerung aus gesteuert und weist weiterhin ein für beide Garräume gemeinsames Anzeigeelement oder Display auf. Das Anzeigeelement weist mehrere verschiedene "Zonen" auf. Eine erste Anzeigezone ist für eine Zeitinformation für den oberen Ofen vorgesehen. Eine zweite Anzeigezone ist entsprechend dem unteren Ofen zugeordnet. Zwischen diesen beiden Zonen ist eine mittlere Zone angeordnet, die als gemeinsames Anzeigeelement sowohl für den oberen als auch für den unteren Ofen vorgesehen ist. Das gemeinsame Anzeigeelement kann jedoch nur die Information einer der beiden Öfen gleichzeitig anzeigen. Deshalb wird lediglich der Ofen angezeigt, dessen Information mit einer hohen Priorität versehen ist, nämlich die Information zu dem oberen Ofen. Um an Informationen über den anderen, unteren Ofen zu gelangen, muss der Benutzer entsprechend intervenieren und eine Reihe von Tasten bzw. Bedienknöpfen betätigen, durch die ein - kurzzeitiges - Umschalten auf den unteren Ofen erfolgt.

Die gemeinsame Anzeigefläche zeigt dem Benutzer somit stets die Information mit der höchsten Priorität an. Deshalb ist der Benutzer im Unklaren darüber, ob und gegebenenfalls in welchem Betriebsstadium sich der untere Ofen befindet. Um das Programm für den unteren Ofen bestimmen zu können, muss zunächst einer der Bedienknöpfe gedrückt werden, wonach die gewünschten Parameter eingestellt werden können. Sobald die gewünschten Parameter eingestellt sind, springt die Anzeige zurück zu dem oberen Ofen, da dieser den höheren Prioritätszustand hat. Ein gleichzeitiges Anzeigen von Informationen für den oberen und den unteren Ofen ist in der US 6,255,630 B1 nicht vorgesehen.

Bekanntlich herrscht im Küchenbetrieb aufgrund der stets wiederkehrenden Stoßzeiten eine enorme Hektik bei der Zubereitung von Speisen. Der Koch bzw. die Köche bzw. der oder die Benutzer arbeiten grundsätzlich an mehreren Geräten gleichzeitig bzw. abwechselnd. Wenn nun nach Tauschen der Anzeige des betreffenden Garraums die Bedienperson diesen Tausch übersieht, und dabei verkennt, dass sie anstelle auf den ersten Garraum, auf den zweiten Garraum einwirkt, so kann es zu sehr misslichen Verwechslungen kommen. Beispielsweise will die Bedienperson die Suppe in Garraum 1 ausgießen, gibt aber den Befehl, das Gulasch in Garraum 2 auszugießen.

Der vorliegenden Erfindung liegt die Aufgabe zugrunde, ein Gargerät der eingangs genannten Art zu schaffen, mit dem eine schnelle, bequeme, ergonomische und sichere Handhabung mehrerer Garräume durch die Bedienungsperson bzw. den Benutzer ermöglicht wird. Weiterhin liegt der vorliegenden Erfindung die Aufgabe zugrunde, ein entsprechendes Verfahren zur Steuerung eines Gargerätes zu schaffen, die dem Benutzer eine sichere Bedienung gewährleistet.

Gemäß dem erfindungsgemäßen Gargerät, welches im Anspruch 1 definiert ist, ist das gemeinsame Anzeigeelement auch als Bedienelement in Form eines berührungsempfindlichen Touch-Screens ausgebildet und ist das Anzeige- und Bedienelement geeignet, Informationen über den Betriebszustand des ausgewählten und des wenigstens einen weiteren Garraums gleichzeitig anzuzeigen, wobei die Anzeige einen Basiszustand beinhaltet und der Basiszustand der Anzeige eine Verriegelung gegen Fehlbedienung darstellt.

Es hat sich nämlich herausgestellt, dass Fehlbedienungen möglich sind, da der Benutzer nicht immer darauf achtet, welcher der Garräume momentan aktiv gesteuert wird. Dieses Problem entsteht, wenn der Benutzer in Gedanken und unter Zeitdruck beispielsweise aus dem rechten Tiegel des rechten Garraums die Suppe ausgießen möchte und versehentlich den linken gerade aktiven Tiegel des gerade aktiven linken Garraums mit Gulasch kippt. Durch ein Umschalten in den Basiszustand lässt sich der Fall wirksam verhindern, da immer erst einer der Garräume ausgewählt werden muss.

Mit dem erfindungsgemäßen Gargerät erhält der Benutzer nicht nur Informationen über den Zustand des aktiv zu steuernden Garraums, sondern gleichzeitig auch Informationen über denjenigen Garraum, der gerade auch in Betrieb ist oder inaktiv ist, auf den er aber nicht aktiv zugreift. Das Gargerät verfügt damit über eine Steuerung, die während der Bedienung des Garraums kontinuierlich Statusinformationen von den anderen oder auch von mehreren oder allen weiteren Garräumen dem Benutzer zur Verfügung stellt.

Erkennt der Benutzer, dass in einem dieser Garräume möglicherweise ein Vorgang etwa unerwartet seine Aufmerksamkeit erfordert, weil die angezeigten Werte nicht seinen Erwartungen und Wünschen entsprechen, kann er sofort einen vielleicht gerade aktiven Vorbereitungsvorgang unterbrechen und auf denjenigen Garraum umschalten, dem er seine Aufmerksamkeit widmen möchte.

Andererseits kommt es auch durchaus vor, dass sich ein Benutzer zwar aktiv einem anderen Garraum widmen möchte, aber einen für ihn vielleicht neuen oder nicht ganz eindeutigen Zubereitungsvorgang in einem anderen Garraum im Auge behalten möchte, um gegebenenfalls eingreifen zu können. Auch diese Information hat er auf seiner Anzeige vorliegen und kann bei wunschgemäßem Verlauf die dortigen Werte zur Kenntnis nehmen und sich weiter dem aktiv zu steuernden Garraum widmen.

Obwohl also nach wie vor nur eine Anzeige und eine Gruppe von Bedienelementen benötigt werden, sind trotzdem mehrere Garräume und die in ihnen ablaufenden Vorgänge unter Beobachtung und es wird ein rascher Zugriff durch einfache Umschaltung auf einen anderen Garraum ermöglicht.

Bisher konnte dies, wie beispielsweise aus der US 6,255,630 B1 bekannt, nur dadurch erfolgen, dass ein Benutzer gewissermaßen "auf Verdacht" zwischen allen Garräumen hin und her schaltete und jeweils einen Garraum aktivierte, auch wenn er lediglich schauen wollte, ob alles so lief, wie vom Benutzer gewünscht.

Weiterhin ist vorteilhaft, dass das Anzeigelement einen Bereich beinhaltet, der die verschiedenen Garräume des Gargeräts symbolisiert, und dass durch Berühren eines Symbols der jeweilige Garraum ausgewählt wird. Dies bietet eine entsprechend schnelle und zielgenaue Eingreifmöglichkeit des Benutzers.

Zur schnelleren Erfassung des aktuellen Zustand des Gargeräts, kann vorteilhafter Weise das Symbol des aktiven Garraums hervorgehoben sein.

Weiterhin ist vorteilhaft, dass im Basiszustand die zur Verfügung stehende Anzeigefläche gleichmäßig zwischen den Garräumen des Gargeräts aufgeteilt wird, und dass in den einzelnen Bereichen Statusinformation zu den ablaufenden Prozessen in den zugeordneten Garräumen angezeigt werden.

Weiterhin ist vorteilhaft, dass die Anzeige nach einer definierten Zeit ohne Benutzereingabe in den Basiszustand wechselt. Diese Zeitspanne kann im Bereich von 10 Sekunden bis 5 Minuten, bevorzugt im Bereich von 30 Sekunden bis 2 Minuten liegen und besonders bevorzugt ca. 1 Minute dauern.

Weiterhin ist vorteilhaft, dass die Steuerungseinstellung für einen Garraum durch Auswählen des zugehörigen Anzeigebereichs, des entsprechenden Symbols oder der zugehörigen Statusanzeige aktiviert wird.

Das erfindungsgemäße Gargerät weist weiterhin den Vorteil auf, dass bei der Rückkehr in die Steuerungsansicht automatisch die letzte vor dem Aktivieren der Basisansicht aufgerufene Steuerungsansicht des jeweiligen Garraums aufgerufen wird. Wenn die Steuerungsansicht beispielsweise 1 Minute inaktiv ist, erfolgt ein automatischer Wechsel in die Basisansicht mit Informationen zu den Garvorgängen in den Garräumen ohne die Möglichkeit einer Bedienung und damit einer Fehlbedienung. Der Benutzer tippt sodann eine Seite der Basisansicht an oder wählt im Bereich der Statusanzeige einen Garraum aus und fährt mit der Bedienung fort. Danach folgt ein direkter Rücksprung in die Steuerung des Garraumes an die Position, in der der Benutzer die letzte Eingabe getätigt hat.

Weiterhin ist vorteilhaft, dass die Statusanzeige des nicht ausgewählten Garraums folgende Informationen beinhaltet:
aktiver Prozess, (Garprogramm, Reinigungsprogramm)
Restzeit aktueller Garschritt / Reinigungsschritt,
nächster Garschritt / Reinigungsschritt,
Restzeit bis zur Beendigung des aktiven Prozesses,
Temperatur der Heizeinrichtung,
Temperatur im Garraum,
Luftfeuchte im Garraum,
Druck im Garraum,
Art der nächsten notwendigen Benutzeraktion,
Zeit bis zur nächsten Benutzeraktion,
Stellung des Geräteablaufs,
Stellung des Gerätezulaufs,
Stellung des Gerätedeckels oder der Gerätetür,
Stellung des Garraums (Kippstellung des Tiegels),
Füllstand im Garraum und/oder
Beladung des Garraums.

Weiterhin ist vorteilhaft, dass bei dem erfindungsgemäßen Gargerät die Position der Symbole der Statusanzeige und/oder des zugeordneten Anzeigebereichs der Anordnung der Garräume im Gargerät entspricht.

Weiterhin ist vorteilhaft, dass die Basisansicht bei notwendigen Benutzeraktionen verändert wird, bevorzugt durch Verändern der Aufteilung der Anzeigefläche zugunsten des Garraums mit der notwendigen Benutzeraktion. Die Aufteilung kann beispielsweise von 50 / 50 % zu 66 / 34 % oder zu 75 / 25 % erfolgen. Diese Aufteilungswerte sind rein beispielhaft und nicht einschränkend.

Weiterhin ist vorteilhaft, dass zur schnelleren Erkenntnis der inaktiven Garräume, diese abweichend dargestellt werden, bevorzugt ausgegraut bzw. farbig hinterlegt sind.

Weiterhin ist vorteilhaft, dass Handlungsanweisungen hervorgehoben werden, bevorzugt in einem größeren Anzeigebereich, wodurch der Benutzer schneller erkennen kann, welche nächste Aktion er initiieren bzw. durchführen soll, beispielsweise die Zugabe weiterer Zutaten gemäß durchgeführtem und in der Gerätesteuerung hinterlegtem Garprogramm.

Weiterhin ist vorteilhaft, dass Handlungsanweisungen mit einer Vorlaufzeit angezeigt werden. So kann der Benutzer sich auf die durchzuführende Handlung, wie beispielsweise Zugabe von Zutaten, rechtzeitig vorbereiten, und zum durch das Garprogramm vorgegebenen Zeitpunkt die Handlung ausführen. Bekanntlich können Garvorgänge in sehr begrenzten Zeiträumen stattfinden, wobei bei Abweichungen sehr häufig das gewünschte Garergebnis verfehlt wird.

Weiterhin ist bei dem Gargerät der vorliegenden Erfindung vorteilhaft, dass die Darstellung von Handlungsanweisungen mit ablaufender Zeit intensiviert wird, so dass dem Benutzer dynamisch mitgeteilt werden kann, wie sich der Zeitpunkt für das Durchführen der nächsten Handlung nähert.

Weiterhin ist vorteilhaft, dass die Darstellung beweglicher Gargerätekomponenten animiert ist. Beispielsweise kann das Ausgießen des Garguts aus einem der Gargeräte animiert dargestellt werden.

Gemäß dem erfindungsgemäßen Verfahren gemäss Anspruch 15 wird bei dem im Gargerät vorgesehenen Anzeige- und Bedienelement auf einfache Weise und eindeutig von dem ausgewählten Garraum zu dem wenigstens einem weiteren Garraum umgeschaltet und werden mittels des Anzeige- und Bedienelements Informationen über den Betriebs-zustand des ausgewählten und des wenigstens zweiten Garraums gleichzeitig angezeigt, wobei die Anzeige einen Basiszustand beinhaltet und der Basiszustand der Anzeige eine Verriegelung gegen Fehlbedienung darstellt.

Mit der vorliegenden Erfindung wird somit für den Benutzer ein Gargerät geschaffen, mit dem über ein Anzeige- und Bedienelement mehrere Garräume bedient und gesteuert werden können, wobei dies für den Benutzer ergonomisch und in der Hektik des Betriebs unter sicherer Vermeidung von Vertauschungen erfolgt. Dies wird ebenfalls durch das erfindungsgemäße Verfahren verhindert.

Weitere Einzelheiten, Merkmale und Vorteile der vorliegenden Erfindung ergeben sich aus der nachfolgenden Beschreibung von Ausführungsbeispielen anhand der beigefügten Zeichnungen. Darin zeigen:
- Fig. 1: ein erfindungsgemäßes Gargerät mit zwei Garräumen und einem gemeinsamen Anzeige- und Bedienelement in Frontansicht
- Fig. 2: das erfindungsgemäße Gargerät von Fig. 1 in Ansicht von oben;
- Fig. 3: eine Anzeige des Basiszustands gemäß der Erfindung;
- Fig. 4: die Anzeige von Fig. 3, jedoch bei einem anderen Bedienungszustand des Gargerätes;
- Fig. 5: eine Anzeige einer Ausführungsform, in der beide Garräume sich im Betrieb befinden;
- Fig. 6a und 6b: eine Anzeige einer weiteren Ausführungsform der Erfindung, bei der die Garräume vertikal übereinander angeordnet sind; und
- Fig. 7: eine Anzeige einer weiteren Ausführungsform der Erfindung mit ungleichmäßiger Aufteilung der Anzeige.

In den Figuren sind gleiche Elemente mit den gleichen Bezugsziffern beizeichnet.

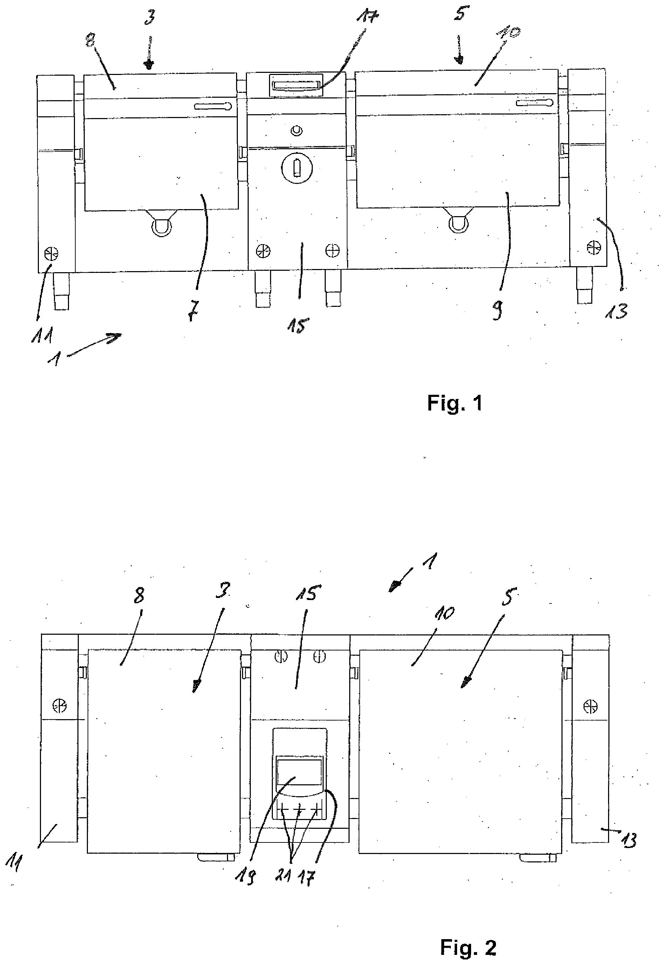

In Fig. 1 ist eine Frontansicht eines erfindungsgemäßen Gargeräts 1 dargestellt, das mehrere Garräume aufweist, nämlich einen ersten Garraum 3 und einen zweiten Garraum 5.

Der erste Garraum 3 wird gebildet aus einem Tiegel 7, der von einem Deckel 8 verschlossen werden kann, wobei in Fig. 1 die Schließposition dargestellt ist. Der Garraum 5 weist ebenfalls einen Tiegel 9 auf, der von einem Deckel 10 verschließbar ist und in Fig. 1 in geschlossener Position dargestellt ist.

Der Tiegel 7 ist schwenkbeweglich in einem linken Rahmenelment 11 und einem mittleren bzw. zentralen Rahmenelement 15 gelagert und der Tiegel 9 ist schwenkbeweglich in dem mittleren bzw. zentralen Rahmenelement 15 und einem rechten Rahmenelement 13 gelagert.

An der Oberseite des zentralen Rahmenelements 17 ist ein Anzeige- und Bedienelement 17 angeordnet, welches besser in Fig. 2 ersichtlich ist, die eine Draufsicht auf das Gargerät 1 von Fig. 1 zeigt. Das Anzeige- und Bedienelement 17 weist einen Touch-Screen 19 auf, der entsprechende Zustände des Gargeräts sowohl des Garraums 3 als auch des Garraums 5 anzeigen kann, als auch durch Berührung entsprechende Eingaben verarbeiten kann.

Wie aus Fig. 2 weiter ersichtlich, sind Einzelbedienelemente 21 vorgesehen, wie beispielsweise Drehknöpfe, mittels derer schnelle vorwählbare Eingaben ermöglicht werden, wie beispielsweise die Auswahl einer Wasserbefüllmenge des jeweiligen Garraums.

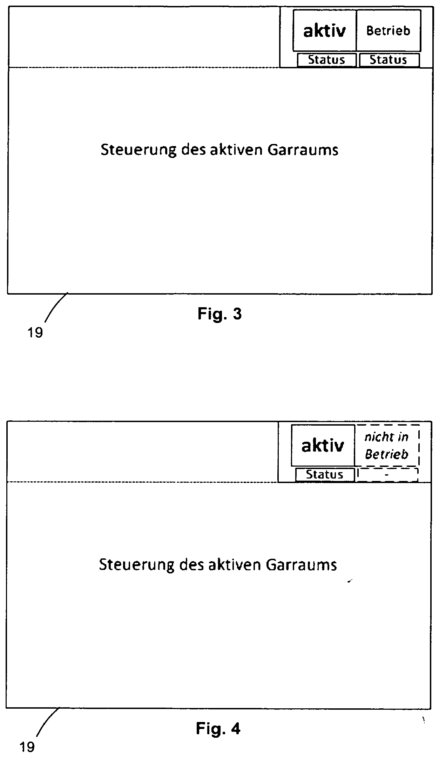

Fig. 3 zeigt einen Basiszustand, der am Touch-Screen 19 angegeben ist, wobei ersichtlich ist, dass gemäß Status beide Garräume im Betrieb sind und der linke Garraum 3 als aktiv in der Anzeige ausgewählt wurde. Die Anordnung der beiden Statusfelder entspricht dem Geräteaufbau, d. h. der linke Garraum ist im Feld links angeordnet und der rechte Garraum im Feld rechts der beiden Statusfelder. Durch Antippen des jeweiligen Garraums wird die zu steuernde Seite ausgewählt. In Fig. 3 ist es der linke Garraum.

Weiterhin ist aus Fig. 3 ersichtlich, dass durch die Statusangabe "Betrieb" dem Benutzer die Angabe vermittelt wird, dass auch der rechte Garraum in Betrieb ist. In einer einfachen Ausführungsform wird eine Restlaufzeit in Form eines Ablaufbalkens gegebenenfalls mit der Angabe der verbleibenden Zeit im Statusfeld eingeblendet.

Fig. 4 zeigt im Gegensatz zu Fig. 3, dass der rechte Garraum nicht in Betrieb ist, und die Steuerung des linken Garraums aktiviert ist.

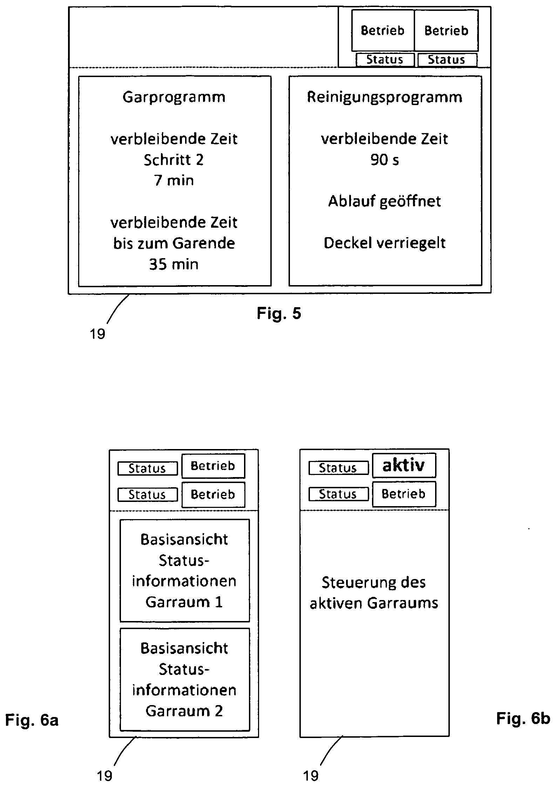

In Fig. 5 ist die Anzeige für beide Garräume gleichmäßig aufgeteilt. Es wird angezeigt, dass beide Garräume sich in Betrieb befinden. Im linken Garraum läuft ein Garprogramm ab, wohingegen im rechten Garraum ein Reinigungsprogramm abläuft, und jeweils der aktuelle Zustand angegeben ist. Die in Fig. 5 dargestellte Anzeige zeigt die Ansicht des Basiszustands. Bei Eingabe also Antippen des linken bzw. des rechten Garraums im Statusfeld wechselt die Anzeige automatisch in den Steuerungsmodus für den gewählten oder den zuletzt aktiven Garraum.

Ist eine Benutzeraktion notwendig, wird die Handlungsanweisung frühzeitig angezeigt. Die Anzeige kann bis zu dem Zeitpunkt, an dem die Benutzeraktion durchzuführen ist, intensiviert werden, beispielsweise durch schneller werdendes Blinken oder eine größere Darstellung.

In den Figuren 6a und 6b ist eine vertikale Aufteilung des Anzeigefeldes 19 dargestellt, wobei diese Anzeige für ein Gargerät geeignet ist, bei dem die Garräume übereinander angeordnet ist, wie dies beispielsweise bei einem Kombidämpfer der Fall ist. Der obere Garraum kann unter sicherer Vermeidung eines Vertauschens durch Antippen des oberen Statusfeldes ausgewählt werden. Der untere entsprechend.

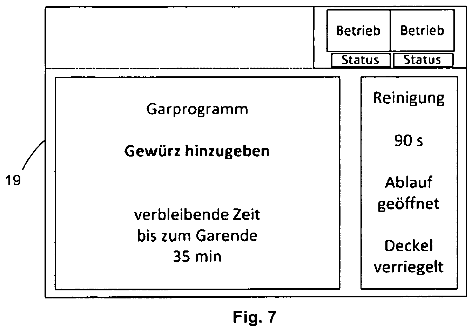

In Fig. 7 ist ein ähnlicher Betriebszustand der beiden Garräume wie in Fig. 5 dargestellt, jedoch ist die Aufteilung der Anzeige ungleichmäßig. Da im linken Garraum ein Garprogramm abläuft, und die Anweisung ausgegeben ist: "Gewürz hinzugeben" wird durch die vergrößerte Darstellung dem Benutzer die Handlungsforderung größer dargestellt, wohingegen die selbstständig ablaufende Reinigung des rechten Garraums verkleinert dargestellt ist, da keine Handlungsanweisung aus dem Reinigungsprogramm erfolgt und somit dem Benutzer nur der Basiszustand des Garraums 5 angezeigt wird.

Mit der vorliegenden Erfindung wird somit ein Gargerät 1 mit mehreren Garräumen 3 und 5 bzw. ein Verfahren zur Steuerung eines solchen Gargeräts geschaffen, bei dem die Zuordnung der Anzeige- und Bedienelemente intuitiv verständlich ist, d. h. die örtliche Anordnung der Garräume 3, 5 wird in dem Anzeige- und Bedienelement richtig und unvertauschbar wiedergegeben. Dem Benutzer wird über dem Bildschirm, beispielsweise dem Touch-Screen 19; ständig der Zustand des jeweiligen Garraums angezeigt, so dass der Benutzer stets beide Garräume im Blick hat und er zugleich weiß, welchen er aktiv bedient, so dass in der Hektik des Betriebs Verwechslungen vermieden werden können.

## Patentansprüche

1. Gargerät (1), welches zur Behandlung von Nahrungsmitteln dient, das aufweist:
wenigstens zwei Garräume (3, 5),
mehrere dem jeweiligen Garraum zugeordnete Heizelemente,
eine Gerätesteuerung, die geeignet ist, die wenigstens zwei Garräume (3, 5) zu steuern, und
für die wenigstens zwei Garräume (3, 5) ein gemeinsames Anzeigeelement (17),
wobei das Anzeigeelement (17) auf einfache Weise und eindeutig von dem ausgewählten Garraum (3, 5) zu dem wenigstens einen weiteren Garraum (3, 5) umschaltbar ist,
**dadurch gekennzeichnet,**
**dass** das gemeinsame Anzeigeelement auch als Bedienelement (17) in Form eines berührungsempfindlichen Touch-Screens ausgebildet ist,
**dass** das Anzeige- und Bedienelement (17) geeignet ist, Informationen über den Betriebszustand des ausgewählten und des wenigstens einen weiteren Garraums gleichzeitig anzuzeigen, und
**dass** die Anzeige einen Basiszustand beinhaltet, und der Basiszustand der Anzeige eine Verriegelung gegen Fehlbedienung darstellt.

2. Gargerät nach Anspruch 1, **dadurch gekennzeichnet, dass** das Anzeigelement (17) einen Bereich beinhaltet, der die verschiedenen Garräume des Gargeräts symbolisiert, und dass durch Berühren eines Symbols der jeweilige Garraum ausgewählt wird.

3. Gargerät nach Anspruch 1 oder 2, **dadurch gekennzeichnet, dass** das Symbol des aktiven Garraums hervorgehoben wird.

4. Gargerät nach einem der Ansprüche 1 bis 3, **dadurch gekennzeichnet, dass** im Basiszustand die zur Verfügung stehende Anzeigefläche gleichmäßig zwischen den Garräumen des Gargeräts aufgeteilt wird, und dass in den einzelnen Bereichen Statusinformationen zu den ablaufenden Prozessen in den zugeordneten Garräumen angezeigt werden.

5. Gargerät nach einem der Ansprüche 1 bis 4, **dadurch gekennzeichnet, dass** die Anzeige nach einer definierten Zeit ohne Benutzereingabe in den Basiszustand wechselt.

6. Gargerät nach einem der Ansprüche 1 bis 5, **dadurch gekennzeichnet, dass** die Steuerungseinstellung für einen Garraum durch Auswählen des zugehörigen Anzeigebereichs, des entsprechenden Symbols oder der zugehörigen Statusanzeige aktiviert wird.

7. Gargerät nach Anspruch 5 oder 6, **dadurch gekennzeichnet, dass** bei der Rückkehr in die Steuerungsansicht automatisch die letzte vor dem Aktivieren der Basisansicht aufgerufene Steuerungsansicht des jeweiligen Garraums aufgerufen wird.

8. Gargerät nach einem der Ansprüche 1 bis 7, **dadurch gekennzeichnet, dass** die Statusanzeige des nicht ausgewählten Garraums folgende Informationen beinhaltet:
aktiver Prozess, (Garprogramm, Reinigungsprogramm)
Restzeit aktueller Garschritt / Reinigungsschritt,
nächster Garschritt / Reinigungsschritt,
Restzeit bis zur Beendigung des aktiven Prozesses,
Temperatur der Heizeinrichtung,
Temperatur im Garraum,
Luftfeuchte im Garraum,
Druck im Garraum,
Art der nächsten notwendigen Benutzeraktion,
Zeit bis zur nächsten Benutzeraktion,
Stellung des Geräteablaufs,
Stellung des Gerätezulaufs,
Stellung des Gerätedeckels oder der Gerätetür,
Stellung des Garraums (Kippstellung des Tiegels),
Füllstand im Garraum und / oder
Beladung des Garraums.

9. Gargerät nach einem der Ansprüche 1 bis 8, **dadurch gekennzeichnet, dass** die Position der Symbole, der Statusanzeige und/oder des zugeordneten Anzeigebereichs der Anordnung der Garräume im Gargerät entspricht.

10. Gargerät nach einem der Ansprüche 1 bis 9, **dadurch gekennzeichnet, dass** die Basisansicht bei notwendigen Benutzeraktionen bzw. Handlungsanweisungen verändert wird, bevorzugt durch Verändern der Aufteilung der Anzeigefläche zugunsten des Garraums mit der notwendigen Handlung durch den Benutzer.

11. Gargerät nach einem der Ansprüche 1 bis 10, **dadurch gekennzeichnet, dass** inaktive Garräume abweichend dargestellt, bevorzugt ausgegraut werden.

12. Gargerät nach einem der Ansprüche 1 bis 11, **dadurch gekennzeichnet, dass** Handlungsanweisungen bzw. Benutzeraktionen hervorgehoben werden, bevorzugt in einem größeren Anzeigebereich.

13. Gargerät nach einem der Ansprüche 1 bis 12, **dadurch gekennzeichnet, dass** Handlungsanweisungen bzw. Benutzeraktionen mit einer Vorlaufzeit angezeigt werden und/oder dass die Darstellung von Handlungsanweisungen mit abgelaufener Zeit intensiviert wird.

14. Gargerät nach einem der Ansprüche 1 bis 13, **dadurch gekennzeichnet, dass** die Darstellung beweglicher Gerätekomponenten animiert ist.

15. Verfahren zur Steuerung eines Gargerätes nach einem der Ansprüche 1 bis 14, bei dem das im Gerät vorgesehene Anzeige- und Bedienelement (17) auf einfache Weise und eindeutig von dem ausgewählten Garraum (3, 5) zu dem wenigstens einen weiteren Garraum (3, 5) umschaltbar ist, und das Anzeige- und Bedienelement (17) geeignet ist, Informationen über den Betriebszustand des ausgewählten und des wenigstens einen weiteren Garraums gleichzeitig anzuzeigen, wobei die Anzeige einen Basiszustand beinhaltet, und der Basiszustand der Anzeige eine Verriegelung gegen Fehlbedienung darstellt.

## Claims

1. Cooking appliance (1) which is used to treat foodstuffs, which cooking appliance has:
at least two cooking chambers (3, 5),
a plurality of heating elements which are associated with the respective cooking chamber,
an appliance controller which is suitable for controlling the at least two cooking chambers (3, 5), and
a common display element (17) for the at least two cooking chambers (3, 5),
wherein the display element (17) can be simply and unambiguously switched over from the selected cooking chamber (3, 5) to the at least one further cooking chamber (3, 5),
**characterized**
**in that** the common display element is also designed as an operator control element (17) in the form of a touch-sensitive touchscreen,
**in that** the display and operator control element (17) is suitable for simultaneously displaying information about the operating state of the selected cooking chamber and the at least one further cooking chamber, and
**in that** the display includes a basic state, and the basic state of the display constitutes locking against faulty operator control.

2. Cooking appliance according to Claim 1, **characterized in that** the display element (17) contains a region which symbolizes the different cooking chambers of the cooking appliance, and **in that** the respective cooking chamber is selected by touching a symbol.

3. Cooking appliance according to Claim 1 or 2, **characterized in that** the symbol of the active cooking chamber is accentuated.

4. Cooking appliance according to one of Claims 1 to 3, **characterized in that**, in the basic state, the available display area is split equally between the cooking chambers of the cooking appliance, and **in that** status information relating to the ongoing processes in the associated cooking chambers is displayed in the individual regions.

5. Cooking appliance according to one of Claims 1 to 4, **characterized in that** the display changes to the basic state after a defined time without any user input.

6. Cooking appliance according to one of Claims 1 to 5, **characterized in that** the control setting for a cooking chamber is activated by selecting the associated display region, the corresponding symbol or the associated status display.

7. Cooking appliance according to Claim 5 or 6, **characterized in that**, when returning to the control view, the last control view of the respective cooking chamber which was called up before activation of the basic view is automatically called up.

8. Cooking appliance according to one of Claims 1 to 7, **characterized in that** the status display of the cooking chamber which is not selected contains the following information:
active process (cooking programme, cleaning programme),
time remaining for the current cooking step/cleaning step,
next cooking step/cleaning step,
time remaining until the end of the active process,
temperature of the heating device,
temperature in the cooking chamber,
atmospheric humidity in the cooking chamber,
pressure in the cooking chamber,
type of next required user action,
time until next user action,
position of the appliance outlet,
position of the appliance inlet,
position of the appliance cover or the appliance door,
position of the cooking chamber (tilting position of the crucible),
filling level in the cooking chamber and/or
loading of the cooking chamber.

9. Cooking appliance according to one of Claims 1 to 8, **characterized in that** the position of the symbols, the status display and/or the associated display region corresponds to the arrangement of the cooking chambers in the cooking appliance.

10. Cooking appliance according to one of Claims 1 to 9, **characterized in that** the basic view is changed when user actions or instructions are required, preferably by changing the split of the display area in favour of the cooking chamber with the required activity by the user.

11. Cooking appliance according to one of Claims 1 to 10, **characterized in that** inactive cooking chambers are displayed differently, preferably greyed out.

12. Cooking appliance according to one of Claims 1 to 11, **characterized in that** instructions or user actions are accentuated, preferably in a relatively large display region.

13. Cooking appliance according to one of Claims 1 to 12, **characterized in that** instructions or user actions are displayed with a lead time, and/or **in that** the display of instructions is intensified as time passes.

14. Cooking appliance according to one of Claims 1 to 13, **characterized in that** the display of moving appliance components is animated.

15. Method for controlling a cooking appliance according to one of Claims 1 to 14, in which the display and operator control element (17) which is provided in the appliance can be simply and unambiguously switched over from the selected cooking chamber (3, 5) to the at least one further cooking chamber (3, 5), and the display and operator control element (17) is suitable for simultaneously displaying information about the operating state of the selected cooking chamber and the at least one further cooking chamber, wherein the display includes a basic state, and the basic state of the display constitutes locking against faulty operator control.

## Revendications

1. Appareil de cuisson (1), qui sert à traiter des produits alimentaires, lequel présente :
au moins deux chambres de cuisson (3, 5),
plusieurs éléments de chauffage associés à la chambre de cuisson respective,
un système de pilotage d'appareil, qui est approprié pour piloter les au moins deux chambres de cuisson (3, 5), et
pour les au moins deux chambres de cuisson (3, 5), un élément d'affichage (17) commun,
dans lequel l'élément d'affichage (17) peut être commuté, de manière simple et claire, de la chambre de cuisson (3, 5) sélectionnée à l'au moins une autre chambre de cuisson (3, 5),
**caractérisé en ce**
**que** l'élément d'affichage commun est réalisé également sous la forme d'un élément de commande (17) se présentant sous la forme d'un écran tactile,
**que** l'élément d'affichage et de commande (17) est approprié pour afficher de manière simultanée des informations concernant l'état de fonctionnement de la chambre de cuisson sélectionnée et de l'au moins une autre chambre de cuisson, et
**que** l'affichage comporte un état de base, et l'état de base de l'affichage représente un verrouillage contre toute commande erronée.

2. Appareil de cuisson selon la revendication 1, **caractérisé en ce que** l'élément d'affichage (17) comporte une zone, qui symbolise les différentes chambres de cuisson de l'appareil de cuisson, et en ce le fait de toucher un symbole permet de sélectionner la chambre de cuisson respective.

3. Appareil de cuisson selon la revendication 1 ou 2, **caractérisé en ce que** le symbole de la chambre de cuisson active est mis en évidence.

4. Appareil de cuisson selon l'une quelconque des revendications 1 à 3, **caractérisé en ce que** dans l'état de base, la surface d'affichage mise à disposition est divisée de manière homogène entre les chambres de cuisson de l'appareil de cuisson, et **en ce que** des informations de statut portant sur les processus en cours de déroulement dans les chambres de cuisson associées sont affichées dans les zones individuellement.

5. Appareil de cuisson selon l'une quelconque des revendications 1 à 4, **caractérisé en ce que** l'affichage passe, après une durée définie sans entrée par l'utilisateur, dans l'état de base.

6. Appareil de cuisson selon l'une quelconque des revendications 1 à 5, **caractérisé en ce que** le réglage du système de pilotage pour une chambre de cuisson est activé en sélectionnant la zone d'affichage associée, le symbole correspondant ou l'affichage de statut associé.

7. Appareil de cuisson selon la revendication 5 ou 6, **caractérisé en ce que** lors du retour à l'aperçu de système de pilotage, le dernier aperçu de système de pilotage appelé avant l'activation de l'aperçu de base de la chambre de cuisson respective est automatiquement appelé.

8. Appareil de cuisson selon l'une quelconque des revendications 1 à 7, **caractérisé en ce que** l'affichage de statut de la chambre de cuisson non sélectionnée comporte les informations suivantes :
processus actif (programme de cuisson, programme de nettoyage)
durée restante de l'étape de cuisson/l'étape de nettoyage instantanée
prochaine étape de cuisson/étape de nettoyage
durée restante jusqu'à la fin du processus actif
température du système de chauffage
température dans la chambre de cuisson
humidité de l'air dans la chambre de cuisson
pression dans la chambre de cuisson
type de la prochaine action de l'utilisateur requise
durée jusqu'à la prochaine action de l'utilisateur
positionnement de l'évacuation d'appareil
positionnement de l'alimentation d'appareil
positionnement du couvercle d'appareil ou de la porte d'appareil
positionnement de la chambre de cuisson (positionnement de basculement du poêlon)
état de remplissage de la chambre de cuisson et/ou
chargement de la chambre de cuisson.

9. Appareil de cuisson selon l'une quelconque des revendications 1 à 8, **caractérisé en ce que** la position des symboles, de l'affichage de statut et/ou de la zone d'affichage associée correspondent à la disposition des chambres de cuisson dans l'appareil de cuisson.

10. Appareil de cuisson selon l'une quelconque des revendications 1 à 9, **caractérisé en ce que** l'aperçu de base est modifié en cas d'actions de l'utilisateur ou d'instructions de manipulation nécessaires, de manière préférée en modifiant la répartition de la surface d'affichage au profit de la chambre de cuisson par la manipulation nécessaire par l'utilisateur.

11. Appareil de cuisson selon l'une quelconque des revendications 1 à 10, **caractérisé en ce que** des chambres de cuisson inactives sont représentées de manière différente, de manière préférée sont grisées.

12. Appareil de cuisson selon l'une quelconque des revendications 1 à 11, **caractérisé en ce que** des instructions de manipulation ou des actions de l'utilisateur sont mises en évidence, de manière préférée dans une zone d'affichage plus grande.

13. Appareil de cuisson selon l'une quelconque des revendications 1 à 12, **caractérisé en ce que** des instructions de manipulation ou des actions de l'utilisateur sont affichées avec un certain délai préalable, et/ou **en ce que** la représentation d'instructions de manipulation est intensifiée au fil de la durée écoulée.

14. Appareil de cuisson selon l'une quelconque des revendications 1 à 13, **caractérisé en ce que** la représentation de composants d'appareil mobiles est animée.

15. Procédé servant à piloter un appareil de cuisson selon l'une des revendications 1 à 14, où l'élément d'affichage et de commande (17) prévu dans l'appareil est commutable, de manière simple et claire, de la chambre de cuisson (3, 5) sélectionnée à l'au moins une autre chambre de cuisson (3, 5), et l'élément d'affichage et de commande (17) est approprié pour afficher des informations concernant l'état de fonctionnement de la chambre de cuisson sélectionnée et de l'au moins une autre chambre de cuisson, dans lequel l'affichage comporte un état de base et l'état de base de l'affichage représente un verrouillage contre toute commande erronée.
